**Europäisches Patentamt**

**European Patent Office**

**Office européen des brevets**

(19)

(11) Veröffentlichungsnummer : **0 402 647 B1**

(12) # EUROPÄISCHE PATENTSCHRIFT

(45) Veröffentlichungstag der Patentschrift :
**30.12.92 Patentblatt 92/53**

(51) Int. Cl.⁵ : **A22C 17/04**

(21) Anmeldenummer : **90109322.9**

(22) Anmeldetag : **17.05.90**

(54) **Verfahren und Vorrichtung zum Bearbeiten der Extremitäten von Geflügel oder dergleichen.**

(30) Priorität : **16.06.89 DE 8907406 U**

(43) Veröffentlichungstag der Anmeldung :
**19.12.90 Patentblatt 90/51**

(45) Bekanntmachung des Hinweises auf die
Patenterteilung :
**30.12.92 Patentblatt 92/53**

(84) Benannte Vertragsstaaten :
**AT BE CH DE DK ES FR GB IT LI LU NL SE**

(56) Entgegenhaltungen :
**WO-A-88/04894**
**DE-A- 2 047 772**

(56) Entgegenhaltungen :
**DE-A- 3 703 836**
**GB-A- 2 124 883**
**NL-A- 7 707 771**
**US-A- 4 041 572**

(73) Patentinhaber : **NORDISCHER**
**MASCHINENBAU RUD. BAADER GMBH + CO**
**KG**
**Geniner Strasse 249**
**W-2400 Lübeck (DE)**

(72) Erfinder : **Lindert, Heinrich**
**Kölkebecker Strasse 62**
**W-4802 Halle (DE)**
Erfinder : **Schulte, Josef, Dipl.-Ing.**
**Buchenweg 30**
**W-2401 Hamberge (DE)**

## Beschreibung

Die Erfindung betrifft ein Verfahren zum Bearbeiten von Knochen enthaltenden Extremitäten von Geflügel , bestehend aus unteren und oberen Arm- oder Beingliedern, die durch ein Mittelgelenk miteinander verbunden sind, an dessen Bildung der innere Gelenkkopf des unteren Gliedes und der äußere Gelenkkopf des oberen Gliedes beteiligt sind, sowie eine Einrichtung zur Durchführung des Verfahrens.

Aus der WO 88/04894 ist ein Verfahren zum Abstreifen des Fleisches von Geflügelschenkeln bekannt, sowie eine Vorrichtung zur Durchführung des Verfahrens. Gekennzeichnet ist dieses Verfahren dadurch, daß einer der Gelenkköpfe entfernt und anschließend der das Fleisch durchziehende Knochen durch Herausziehen oder -schieben entfernt wird. Dies wird besorgt durch Schabemesser, die eine Relativbewegung in bezug auf den Knochen ausführen und zwar in Richtung auf den abgetrennten Gelenkkopf, so daß das Fleisch nach diesem Bearbeitungsprozeß im wesentlichen unbeschädigt vorliegt.

Aus der DE-OS 37 03 836 ist weiter eine Bearbeitungsanlage für Geflügelteile zu entnehmen, bei der aus Ober- uund Unterglied bestehende Geflügelbeine zwischen Nagelplatten gehalten und zentriert werden, worauf das Kniegelenk ausgestanzt und jedes Geflügelbein über die gesamte Länge geteilt wird, d. h. auch die Knochen längs gespalten und schließlich die Knochenhälften aus den Fleischteilen herausgehoben werden.

Während nach dem erstgenannten Stand der Technik lediglich Unter- und Oberschenkel von Geflügel bearbeitbar sind, ergibt sich bei dem letztgenannten der Nachteil, daß die realtiv geringe Dicke des Knochens von Hähnchenschenkeln ein hochgenaues Teilen erfordert, um die Knochenhälften ohne Gefahr eines Bruches herauszulösen. Ein weiterer Nachteil besteht bei diesem Teilungsprozeß darin, daß das Knochenmark über die Schnittfläche verteilt wird und darin, daß Knochenmehl entsteht, das die Schnittfläche ebenfalls "verunreinigt".

Es ist daher die Aufgabe der Erfindung, eine leistungsfähige, sicher wirkende und einfach zu bedienende Einrichtung zu schaffen, mit welcher die Unter-. und Oberglied umfassenden Extremitäten von Geflügel entbeint werden können, ohne daß das Fleisch nennenswert beschädigt wird.

Diese Aufgabe wird erfindungsgemäß durch ein Verfahren gelöst, welches die Verfahrensschritte: Einschneiden der Haut im Bereich des äußeren Gelenkkopfes des unteren Gliedes durch einen radial umlaufenden, im wesentlichen bis auf den Knochen geführten Einschnitt; Freilegen der Flanken im Bereich des Mittelgelenkes; Entfernen des Mittelgelenkes; und Bewegen der so erzeugten Knochenstümpfe in Richtung voneinander weg unter Rückhalten des Fleischteils umfaßt.

Das durch Anwendung dieses Verfahrens erzielbare positive Ergebnis beruht im wesentlichen darauf, daß der das Fleisch durch Sehnen, Bänder und Häute mit den Knochen verbindende Bereich des Mittelgelenkes entfernt wird und dadurch diese Verbindungen aufgehoben werden. Dabei ist der Fleischverlust minimal, da die verbliebene Fleischauflage auf den Knochen in diesem Bereich relativ gering ist.

In einer bevorzugten Ausführung einer zur Durchführung des erfindungsgemäßen Verfahrens geeigneten Einrichtung mit mindestens einer längs der Bearbeitungsbahn bewegbaren Haltevorrichtung für das Bearbeitungsgut können längs der Bearbeitungsbahn aufeinanderfolgend angeordnet sein: Eine Schneideinrichtung zum Trennen der den Bereich des Mittelgelenks überspannenden Haut durch im wesentlichen quer zur Längsrichtung der unteren und oberen Arm- oder Beinglieder verlaufende Einschnitte, eine Schneid-Schabevorrichtung zum abschieben der auf den flanken des Mittelgelenks aufliegenden Fleisch- und Hautteile, eine Stanzvorrichtung zum Entfernen des Mittelgelenks , und zangenartige Greifmittel zum Herausziehen der Knochenstümpfe aus den umgebenden Fleischteilen.

Eine einfache Beschickbarkeit der Einrichtung kann dadurch erreicht werden, daß jede Haltevorrichtung zwei zueinander beabstandete, aufragende Halteelemente aufweist, die jeweils mit einer Öffnung in form einer offenen Aussparung für die Halterung des Bearbeitungsgutes im Bereich der außen liegenden Gelenkköpfe versehen sind, und daß die Bewegung jeder Haltevorrichtung quer zu einer gedachten, die Öffnungen verbindenden Verbindungslinie erfolgt und jeder Haltevorrichtung ein aktivierbarer Niederhalter zum zeitweiligen festhalten und Ausrichten des Bearbeitungsgutes zugeordnet ist.

Die Schneidvorrichtung zum Einschneiden der Haut entsprechend Verfahrensschritt a) kann stationär angeordnet sein und ein Paar mit gegen die Bewegungsrichtung der Haltevorrichtungen weisenden Schneiden versehener Messerklingen umfassen, die in einer parallel zu der Bewegungsbahn der Haltevorrichtungen und im wesentlichen senkrecht zu dieser und unmittelbar neben der Bahn der Außenflanke eines der Halteelemente verlaufenden Ebene durch das Bearbeitungsgut gegen Federkraft verdrängbar angeordnet sein können, welche Anordnung den Vorzug aufweist, einen ziehenden Rundumschnitt zu erzeugen.

Für die später folgende Stanzbearbeitung ist eine genaue Ausrichtung der Lage des Mittelgelenkes erforderlich. Um dessen Lage mit der gewünschten Genauigkeit kontrollierbar zu machen, hat sich das freilegen der flanken des Mittelgelenkes als vorteilhaft erwiesen, da so ein ausrichtender Angriff direkt an dem Mittelgelenk möglich ist. Dieses freilegen kann mittels einer stationär angeordneten Schneid-Schabevorrichtung mit einem Paar von unten und oben gegen das Bearbeitungsgut im Bereich des Mittelgelenkes einsteuerbarer, und auf diesem sich federnd abstützender Pflugmesser erfolgen, welche in im wesentlichen horizontalen Ebenen gegen die Bewegungsrichtung des Bearbeitungsgutes divergierende Schabekanten aufweisen, die von einer vorausweisenden Stirnschneide ausgehen.

Auf das freigelegte Mittelgelenk können zum Zwecke des Ausrichtens in die zum nachfolgenden Ausstanzen desselben erwünschte Lage Ausrichtmittel zur Einwirkung gebracht werden, die einen mindestens mit einer äußeren Flanke des Mittelgelenkes in Kontakt tretenden Druckstempel mit im wesentlichen hohlkegelförmiger Ausgestaltung seiner Stirnfläche aufweisen können.

Das Ausstanzen kann vorteilhaft mittels einer Stanzvorrichtung durchgeführt werden, bestehend aus einem in die Bahn des Bearbeitungsgutes einsteuerbaren Hohlstempel, dessen Querschnitt der Kontur der an der Bildung des Mittelgelenkes beteiligten Gelenkköpfe im wesentlichen angepaßt sind.

Die auf diese Weise von den wesentlichen Verbindungen mit dem Fleisch befreiten Knochenstümpfe können nunmehr durch neben den Außenflanken der Halteelemente angeordnete zangenartigen Greifmittel, die jeweils im wesentlichen parallel zu der Längsachse des Bearbeitungsgutes in entgegengesetzten Richtungen bewegbar sind, ohne wesentliche Beanspruchung der Fleischteile aus diesen herausgezogen werden.

Eine besonders vorteilhafte Anordnung der Einrichtung sieht schließlich vor, daß die Haltevorrichtungen an einem endlosen, kontinuierlich umlaufend angetriebenen Förderer aus einem Paar parallel zueinander geführter Fördergurte befestigt sind, wobei jeweils eines der beiden, die Haltevorrichtung bildenden Halteelemente an jeweils einem der beiden Fördergurte derart angeordnet ist, daß sie sich unter Belassen eines Zwischenraumes zwischen sich einander gegenüberstehen, und daß die Bearbeitungsmittel im Bereich der Peripherie eines Umlenkrades für den Förderer angeordnet sind, wobei mindestens die Stanzvorrichtung zum Entfernen des Mittelgelenks und die zangenartigen Greifmittel zum Herausziehen der Knochenstümpfe eingerichtet eingerichtet sind, in ihrer Aktivstellung eine mit der Umlaufgeschwindigkeit des Förderers synchronisierte Begleitbewegung durchzuführen.

Die Erfindung wird nachstehend anhand eines in der Zeichnung dargestellten Ausführungsbeispieles näher erläutert. Es zeigen

Fig. 1a bis k die jeweiligen Aktivphasen bzw. Ergebnisse der einzelnen Arbeitsschritte nach dem erfindunggemäßen Verfahren, wobei dargestellt ist in

Fig. 1a die Einlegephase,

Fig. 1b die Ausricht- und Festlegephase,

Fig. 1c u. 1d das Anschneiden und Durchtrennen der Haut im Bereich des Gelenkkopfes des unteren Beingliedes,

Fig. 1e u. 1f das Freilegen der Flanken im Bereich des Mittelgelenkes im Ansatz und Ergebnis,

Fig. 1g das Ausrichten des Mittelgelenkes in die zum Stanzen erwünschte Lage,

Fig. 1h das Ausstanzen des Mittelgelenkes im Ansatz,

Fig. 1i das Herausschneiden der Knochenstümpfe,

Fig. 1k das Ergebnis der Bearbeitungs-Schrittfolge, sowie

Fig. 2 die Seitenansicht einer industriell einsetzbaren Einrichtung in vereinfachter Darstellung.

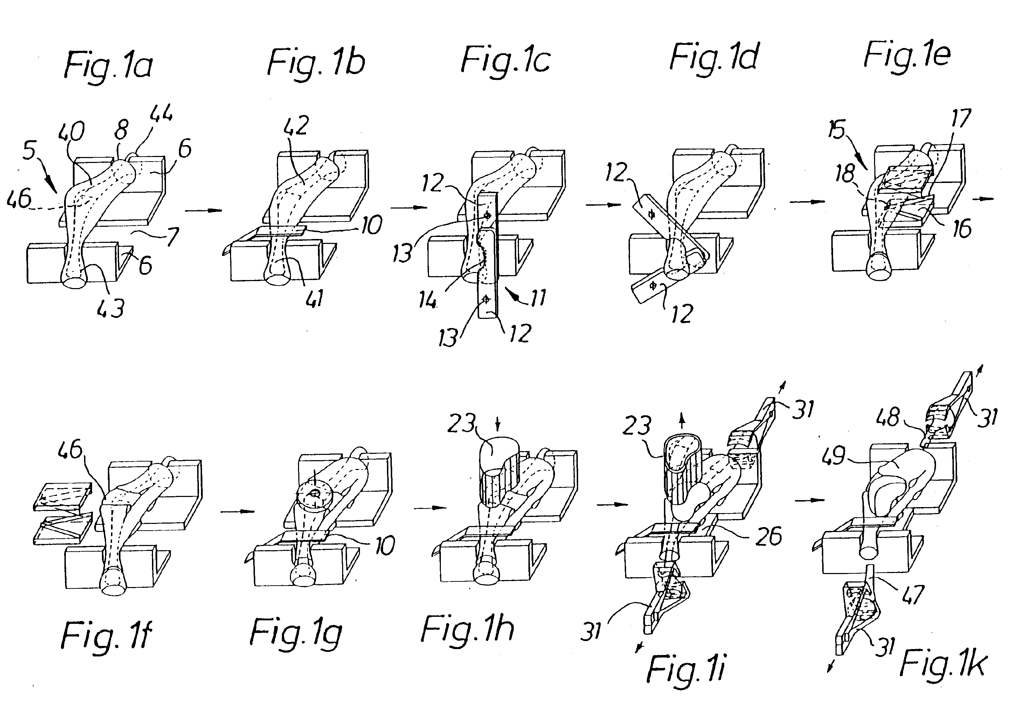

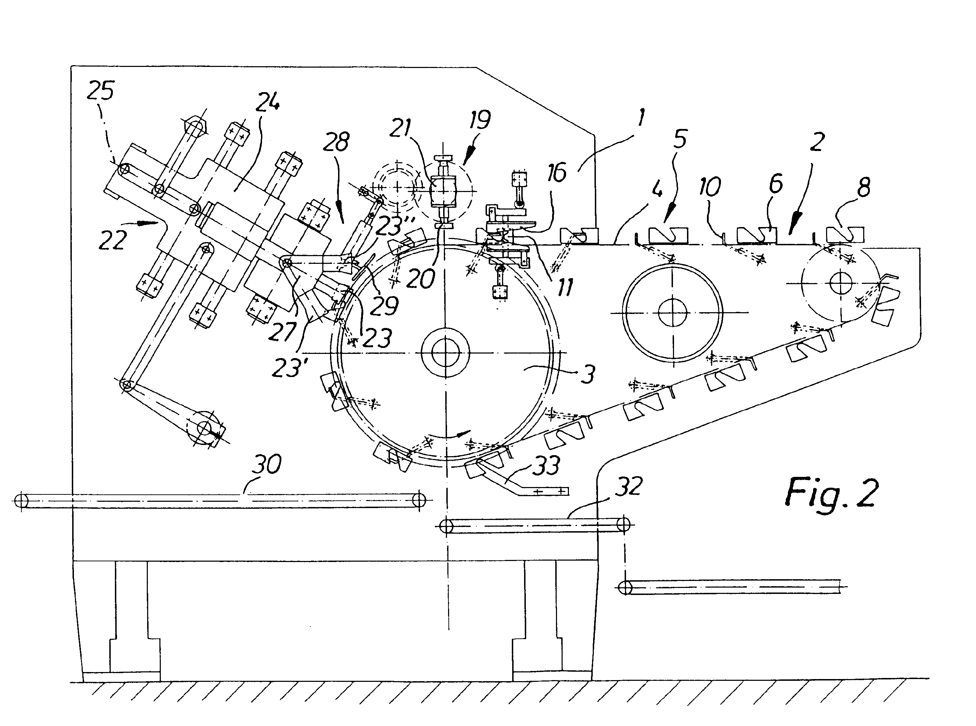

Gemäß Fig. 2 ist die erfindungsgemäße Einrichtung an einem portalartigen Gestell 1 untergebracht, dessen dem Betrachter zugekehrte Portalhälfte aus Gründen der besseren Einsichtnahme in die Anordnung der Bearbeitungswerkzeuge entfernt ist. Diese sind im wesentlichen im Bereich der Peripherie eines Umlenkrades 3 eines Förderers 2 installiert, der im übrigen aus zwei parallel zueinander, synchron umlaufend angetriebenen, endlosen Fördergurten 4 besteht. Der Förderer 2 ist mit Haltevorrichtungen 5 bestückt, die unter gleicher Teilung angeordnet sind. Jede Haltevorrichtung 5 setzt sich aus zwei Halteelementen 6 zusammen, die sich spiegelbildlich unter Belassen eines Zwischenraumes 7 einander gegenüberstehen, was dadurch erreicht wird, daß die linken und die rechten Halteelemente 6 jeweils einem der Fördergurte 4 zugeordnet sind. Jedes Halteelement 6 ist als Stützsteg ausgebildet und mit einer Öffnung 8 in Form einer offenen Aussparung für die Halterung der zu bearbeitenden Schenkel 40 im Bereich der außenliegenden Gelenkköpfe 43, 44 versehen. Die Öffnungen 8 sind dabei so zueinander ausgerichtet, daß eine deren Mitten verbindende Verbindungslinie 9 quer zu der Bewegung der Haltevorrichtungen 5 verläuft. Jeder Haltevorrichtung 5 ist ein Niederhalter 10 zugeordnet (sh. auch Fig. 1b) , der in geeigneter Weise im Förderverlauf betätigbar ist.

Die Reihe der Bearbeitungswerkzeuge beginnt mit einer Schneidvorrichtung 11 , die stationär angeordnet ist und aus einem Paar Messerklingen 12 besteht, die unterhalb bzw. oberhalb der Bewegungsbahn der Haltevorrichtungen 5 um horizontale Achsen 13 schwenkbar gelagert sind, so daß sie in einer Ebene verschwenkbar sind, die senkrecht zu der Bewegungsbahn der Haltevorrichtungen 5 und unmittelbar neben der Bahn der Außenflanke eines der Halteelemente 6 verläuft. Die Messerklingen 12 sind , wie aus Fig. 1c ersichtlich, einander scherenartig kreuzend montiert und mit Schneiden 14 an ihren gegen die Bewegungsrichtung des Förderers 2 weisenden Kanten versehen. Dabei folgen die Schneiden 14 einer konkaven Kontur, die in Höhe der Bahn der Schenkelknochen ausgespart ist. Die Messerklingen 12 werden durch nicht gezeigte Federn in ihrer Grundstellung gehalten und sind gegen diese durch den zu bearbeitenden Schenkel 40 verdrängbar, so daß sich im Verlaufe des Vorbeigangs der Haltevorrichtung 5 ein die Haut trennender Rundumschnitt um das untere Beinglied 41 herum ergibt. Durch entsprechende Gestaltung der Schneide 14 , beispielsweise Stumpfbelassen bestimmter Bereiche der konkaven Kontur, kann sichergestellt werden, daß die Fußsehnen unbeschädigt bleiben, was ermöglicht, diese schließlich mit den Knochen aus dem Fleisch herauszuziehen.

Das folgende Bearbeitungswerkzeug besteht aus einer Schneid-Schabevorrichtung 15 mit einem Paar von unten und oben gegen das Mittelgelenk 46 einsteuerbarer Pflugmesser 16 . Diese sind mit einander zugekehrten, gegen die Förderrichtung divergierenden Schabekanten 17 versehen, die von einer vorausweisenden Stirnschneide 18 ausgehen. Die Steuerung erfolgt auf geeignete Weise im Takt der vorbeilaufenden Haltevorrichtungen 5 und zwar so, daß die Stirnschneide 18 jeweils bei Ankunft einer Haltevorrichtung 5 mit den Flanken des Mittelgelenkes 46 des zu bearbeitenden Schenkels 40 in Kontakt tritt, das dort aufliegende Fleisch bis an den Knorpelbereich spaltet und im Verlaufe des Vorbeigangs mittels der Schabekanten 17 in Richtung auf die äußeren Enden des Schenkels 40 auseinanderschiebt (sh. Fig. 1e und 1f). Wie in Fig. 2 angedeutet, kann die Schneid-Schabeeinrichtung 15 auch so aufgebaut sein, daß die Stirnschneiden 18 und Schabekanten 17 der einander gegenüberliegenden Pflugmesser 16 einen in Bewegungsrichtung des Förderers 2 enger werdenden Spalt bilden, in den das Mittelgelenk 46 einläuft.

Die Pflugmesser 16 sind dann lediglich gegen nicht gezeigte Federn auseinander drängbar angeordnet. Wie weiter aus Fig. 2 hervorgeht, sind die Schneidvorrichtung 11 und die Schneid-Schabevorrichtung 15 etwa in gleicher Position in bezug auf den Förderer 2 vorgesehen.

Mit dem so freigelegten Mittelgelenk 46 tritt, wie in Fig. 1g angedeutet, ein Ausrichter 19 in Kontakt. Dieser weist einen federbelasteten Druckstempel 20 auf, der an seiner Stirnfläche hohlkegelförmig ausgestaltet ist. Der Druckstempel 20 ist entsprechend Fig. 2 an einem Rotationskörper 21 befestigt, der durch synchronisierten Umlauf mit dem Förderer 2 über einen gewissen Zeitabschnitt eine Begleitbewegung mit diesem ausführt. Das Mittelgelenk 46 wird damit in die für einen genauen Stanzvorgang notwendige Position gebracht, die durch den Niederhalter 10 fixiert wird.

Der Stanzvorgang wird durch eine nachgeschaltete Stanzvorrichtung 22 ausgeführt. Sie ist mit einem Hohlstempel 23 versehen und an einem Schlitten 24 montiert, der auf einer Bahn verschiebbar ist, die senkrecht zu der Mittelachse 25 des Hohlstempels 23 verläuft. Die Mittelachse 25 weist dabei auf die Achse des Umlenkrades 3 . Der Hohlstempel 23 ist gegen die Peripherie des Umlenkrades 3 verfahrbar und hat als Widerlager eine Gegenlage 26 , die mindestens in dem Wirkbereich der Stanzvorrichtung 22 in dem zwischenraum 7 vorgesehen ist. Der Schlitten 24 wird über ein nicht gezeigtes Kurvengetriebe so gesteuert, daß der Hohlstempel 23 über einen gewissen Weg eine zu der Umlaufgeschwindigkeit des Umlenkrades 3 synchrone Begleitbewegung vollführt, nach deren Beendigung eine Reversierbewegung durchgeführt wird, die den Hohlstempel 23 in die Bereitschaftsstellung für den nächsten Begleithub verbringt. Der Hohlstempel 23 hat in Anpassung an die Kontur der an der Bildung des Mittelgelenkes 46 beteiligten Gelenkköpfe der Schenkelknochen in etwa Nierenform und ist an seiner Stirnkante geschärft. Der Stanzvorgang wird während des Mitlaufs des Schlittens 24 mit einer Haltevorrichtung durch Verfahren des Hohlstempels 23 bis zum Kontakt seiner Stirnkante mit der Gegenlage 26 durchgeführt.

Wie aus Fig. 2 ersichtlich, kann der Hohlstempel 23 mit zwei weiteren Hohlstempeln 23′ u. 23″ an einem Revolverkopf 27 angebracht sein, was die Bearbeitung unterschiedlich großer Schenkel 40 ermöglicht. Ein automatischer Wechsel jeweils unter Berücksichtigung der Größe des jeweils zu bearbeitenden Schenkels 40 kann durch einen Größentaster 28 mit einem Tastschuh 29 gesteuert werden, der mit dem freigelegten Mittelgelenk 46 in Kontakt gebracht wird und je nach ermitteltem Höhenmaß eine Meßgröße liefert, die auf geeignete Weise für eine rechtzeitige Umschaltung auf den entsprechenden Hohlstempel 23′ oder 23″ auswertbar ist. Das ausgestanzte Mittelgelenk 46 befindet sich im Inneren des jeweiligen Hohlstempels und wird kurz vor Erreichen der Endstellung des Rückhubes durch einen nicht gezeigten Auswerfer auf ein Abfalltransportband 30 ausgeworfen (sh. Fig. 2).

Nach diesem Vorgang erfassen zangenförmige Greifmittel 31 entsprechend Figuren 1i und 1k , die die Haltevorrichtungen 5 während ihres Umlaufes längs der Peripherie des Umlenkrades 3 begleiten , die aus den Öffnungen 8 nach außen über die Halteelemente 6 hinausragenden äußeren Gelenkköpfe 43, 44 und ziehen die Knochenstümpfe 47, 48 in geeigneter Weise gesteuert aus dem Schenkelfleisch heraus, wobei dieses durch die Halteelemente 6 zurückgehalten wird. Durch anschließendes Öffnen der Greifmittel 31 werden die gezogenen Knochenstümpfe 47, 48 ebenfalls auf das Abfalltransportband 30 gegeben. Das Fleischteil 49 wird zunächst noch durch den Niederhalter 10 festgehalten und erst im Bereich des tiefsten Umlenkpunktes des Förderers 2 freigegeben, so daß es auf ein separates Transportband 32 abgegeben wird. Dieser Vorgang kann durch einen Ausheber 33 abgesichert werden, der das Fleischteil 49 unterfährt und aufgrund der Förderbewegung zwangsweise aushebt.

## Bezugszeichenliste

| | | | |
|---|---|---|---|
| 1 | Gestell | 30 | Abfalltransportband |
| 2 | Förderer | 31 | Greifmittel |
| 3 | Umlenkrad | 32 | Transportband |
| 4 | Fördergurt | 33 | Ausheber |
| 5 | Haltevorrichtung | 40 | Extremitäten (Schenkel) |
| 6 | Halteelement | | |
| 7 | Zwischenraum | 41 | unteres Arm-/Glied |
| 8 | Öffnung | | |
| 9 | Verbindungslinie | 42 | oberes Arm-/Glied |
| 10 | Niederhalter | | |
| 11 | Schneidvorrichtung | 43 | äußerer Gelenkkopf |
| 12 | Messerklinge | 44 | äußerer Gelenkkopf |
| 13 | Achse | 45 | |
| 14 | Schneide | 46 | Mittelgelenk |
| 15 | Schneid-Schabevorrichtung | 47 | Knochenstumpf |
| 16 | Pflugmesser | 48 | Knochenstumpf |
| 17 | Schabekante | 49 | Fleischteil |
| 18 | Stirnschneide | | |
| 19 | Ausrichter | | |
| 20 | Druckstempel | | |
| 21 | Rotationskörper | | |
| 22 | Stanzvorrichtung | | |
| 23 | Hohlstempel | | |
| 24 | Schlitten | | |
| 25 | Mittelachse | | |
| 26 | Gegenlage | | |
| 27 | Revolverkopf | | |
| 28 | Größentaster | | |
| 29 | Tastschuh | | |

**Patentansprüche**

1. Verfahren zum Bearbeiten von Knochen enthaltenden Extremitäten von Geflügel, bestehend aus unteren (41) und oberen (42) Arm- oder Beingliedern, die durch ein Mittelgelenk (46) miteinander verbunden sind, an dessen Bildung der innere Gelenkkopf des unteren Gliedes (41) und der äußere Gelenkkopf des oberen Gliedes (42) beteiligt sind, **gekennzeichnet durch** die Verfahrensschritte:

   a) Einschneiden der Haut im Bereich des äußeren Gelenkkopfes (43) des unteren Gliedes (41) durch einen radial umlaufenden, im wesentlichen bis auf den Knochen geführten Einschnitt,

   b) Freilegen der Flanken im Bereich des Mittelgelenkes (46),

   c) Entfernen des Mittelgelenkes (46) , und

   d) Bewegen der so erzeugten Knochenstümpfe (47 und 48) in Richtung voneinander weg unter Rückhalten des Fleischteils (49) .

2. Einrichtung zur Durchführung des Verfahrens nach Anspruch 1 , bei welcher mindestens eine Haltevorrichtung (5) für das Bearbeitungsgut vorgesehen ist, die längs einer Bearbeitungsbahn bewegbar ist, dadurch gekennzeichnet, daß längs der Bewegungsbahn der Haltevorrichtungen aufeinanderfolgend angeordnet sind

   - eine Schneideinrichtung (11) zum Trennen der den Bereich des Mittelgelenks (46) überspannenden Haut durch im wesentlichen quer zur Längsrichtung der unteren (41) und oberen (42) Arm- oder Beinglieder verlaufende Einschnitte,

   - eine Schneid-Schabevorrichtung (15) zum Abschieben der auf den Flanken des Mittelgelenks (46) aufliegenden Fleisch- und Hautteile,

   - eine Stanzvorrichtung (22) zum Entfernen des Mittelgelenks (46), und

   - zangenartige Greifmittel (31) zum Herausziehen der Knochenstümpfe (47 und 48) aus den umgebenden Fleischteilen.

3. Einrichtung nach Anspruch 2 , **dadurch gekennzeichnet**, daß jede Haltevorrichtung (5) zwei zueinander beabstandete, aufragende Halteelemente (6) aufweist, die jeweils mit einer Öffnung (8) in Form einer offenen Aussparung für die Halterung des Bearbeitungsgutes im Bereich der außen liegenden Gelenkköpfe (43 und 44) versehen sind, und daß die Bewegung jeder Haltevorrichtung (5) quer zu einer gedachten, die Öffnungen (8) verbindenden Verbindungslinie (9) erfolgt.

4. Einrichtung nach Anspruch 2 oder 3 , **dadurch gekennzeichnet** , daß jeder Haltevorrichtung (5) ein aktiverbarer Niederhalter (10) zum zeitweiligen Festhalten und Ausrichten des Bearbeitungsgutes zugeordnet ist.

5. Einrichtung nach einem der Ansprüche 2 bis 4 , **dadurch gekennzeichnet** , daß die Schneidvorrichtung (11) stationär angeordnet ist und ein Paar mit gegen die Bewegungsrichtung der Haltevorrichtungen (5) weisenden Schneiden (14) versehener Messerklingen (12) umfaßt , die in einer parallel zu der Bewegungsbahn der Haltevorrichtungen (5) und im wesentlichen senkrecht zu dieser und unmittelbar neben der Bahn der Außenflanke eines der Halteelemente (6) verlaufenden Ebene durch das Bearbeitungsgut gegen Federkraft verdrängbar angeordnet sind.

6. Einrichtung nach einem der Ansprüche 2 bis 5 , **dadurchgekennzeichnet** , daß die Schneid-Schabevorrichtung (15) stationär angeordnet ist und ein Paar von unten und oben gegen das Bearbeitungsgut im Bereich des Mittelgelenkes (46) einsteuerbarer, und auf diesem sich federnd abstützender Pflugmesser (16) umfaßt, welche in im wesentlichen horizontalen Ebenen gegen die Bewegungsrichtung des Bearbeitungsgutes divergierende Schabekanten (17) aufweisen, die von einer vorausweisenden Stirnschneide (18) ausgehen.

7. Einrichtung nach einem der Ansprüche 2 bis 6 , **dadurch gekennzeichnet** , daß die Stanzvorrichtung (22) einen in die Bahn des Bearbeitungsgutes einsteuerbaren Hohlstempel (23) umfaßt, dessen Querschnitt der Kontur der an der Bildung des Mittelgelenkes (46) beteiligten Gelenkköpfe im wesentlichen angepaßt ist.

8. Einrichtung nach einem der Ansprüche 6 oder 7 , **dadurch gekennzeichnet** , daß Mittel (19) zum Ausrichten des Bearbeitungsgutes in die zum Ausstanzen des Mittelgelenkes (46) erwünschte Lage vorgesehen sind, wobei diese Mittel (19) einen mindestens mit einer äußeren Flanke des Mittelgelenkes (46) in Kontakt tretenden Druckstempel (20) mit im wesentlichen hohlkegelförmiger Ausgestaltung seiner Stirnfläche aufweisen.

9. Einrichtung nach einem der Ansprüche 2 bis 8 , **dadurch gekennzeichnet** , daß die zangenartigen Greifmittel (31) jeweils im Bereich unmittelbar neben den Außenflanken der Halteelemente (6) angeordnet sind und jeweils im wesentlichen parallel zu der Längsachse des Bearbeitungsgutes in entgegengesetzten Richtungen bewegbar sind.

10. Einrichtung nach einem Anspruch 2 bis 9 , **dadurch gekennzeichnet** , daß die Haltevorrichtungen (5) an einem endlosen, kontinuierlich umlaufend angetriebenen Förderer (29) aus einem Paar parallel zueinander geführter Fördergurte (4) befestigt sind, wobei jeweils eines der beiden, die Haltevorrichtung (5) bildenden Halteelemente (6) an jeweils einem der beiden Fördergurte (4) derart angeordnet ist, daß sie sich unter Belassen eines Zwischenraumes (7) zwischen sich einander gegenüberstehen, und daß die Bearbeitungsmittel (11, 15, 22, 31) im Bereich der Peripherie eines Umlenkrades (3) für den Förderer (2) angeordnet sind, wobei mindestens die Stanzvorrichtung (22) und die zangenartigen Greifmittel (31) eingerichtet sind, in ihrer Aktivstellung eine mit der Umlaufgeschwindigkeit des Förderers (2) synchronisierte Begleitbewegung durchzuführen.

## Claims

1. Method for the processing of extremities, which contains bones, of poultry, consisting of lower (41) and upper (42) wing or leg elements, which are connected together by a centre joint (46), in the formation of which are concerned the inner joint head of the lower element (41) and the outer joint head of the upper element (42), characterised by the method steps:
   a) cutting of the skin in the region of the outer joint head (43) of the lower element (41) by an incision running radially around and led up to the bone,
   b) exposing of the flanks in the region of the centre joint (46),
   c) removal of the centre joint (46), and
   d) moving of the thus produced bone stumps (47 and 48) in direction away from one another while restraining the flesh part (49).

2. Equipment for the carrying out of the method according to claim 1, in which at least one holding device (5), which is movable along a processing path, is provided for the stock to be processed, characterised thereby that arranged in succession along the movement path of the holding devices are
   - a cutting device (11) for the dividing of the skin, which stretches over the region of the centre joint (46), by cuts extending substantially transversely to the longitudinal direction of the lower (41) and upper (42) wing or leg elements,
   - a cutter-scraper device (15) for the clearing off of the flesh and skin parts lying on the flanks of the centre joint (46),
   - a punch device (22) for the removal of the centre joint (46), and
   - tong-like gripper means (31) for the withdrawal of the bone stumps (47 and 48) from the surrounding flesh parts.

3. Equipment according to claim 2, characterised thereby that each holding device (5) has two mutually spaced apart, upwardly projecting holding elements (6), which are each provided with an opening (8) in the form of an open recess for the retention of the stock to be processed in the region of the outwardly disposed joint heads (43 and 44), and that the movement of each holding device (5) is effected transversely to a notional connecting line connecting the openings (8).

4. Equipment according to claim 2 or 3, characterised thereby that associated with each holding device (5) is an activatable holding-down device (10) for the temporary restraining and orientation of the stock to be processed.

5. Equipment according to one of the claims 2 to 4, characterised thereby that the cutter device (11) is arranged in a stationary location and comprises a pair of knife blades (12), which are provided with cutting edges (14) pointing against the movement direction of the holding devices (5) and which are arranged to be displaceable against spring force, and through the stock to be processed, in a plane extending parallel to the movement path of the holding devices (5) and substantially perpendicularly thereto and directly beside the path of the outer flank of one of the holding elements (6).

6. Equipment according to one of the claims 2 to 5, characterised thereby that the cutter-scraper device (15) is arranged at a stationary location and comprises a pair of scraper knives (16), which are drivable from below and above against the stock to be processed in the region of the centre joint (46), are resiliently supported on this and have scraper edges (17), which diverge in substantially horizontal planes against the movement direction of the stock to be processed and which start from a forwardly pointing front cutting edge (18).

7. Equipment according to one of claims 2 to 6, characterised thereby that the punch device (22) comprises a hollow punch which is drivable into the path of the stock to be processed and the cross-section of which is substantially matched to the contour of the joint heads concerned in the formation of the centre joint (46).

8. Equipment according to one of the claims 6 or 7, characterised thereby that means (19) are provided for the orientation of the stock to be processed in the position desired for the punching out of the centre joint (46), wherein these means (19) have a pressure punch (20), which gets into contact at least with one outer flank of the centre joint (46) and which has a substantially hollow conical shaping of its front surface.

9. Equipment according to one of the claims 2 to 8, characterised thereby that the tong-like gripper means (31) are arranged respectively in the region directly beside the outer flanks of the holding elements (6) and are each time movable substantially parallel to the longitudinal axis of the stock to be processed and in opposite directions.

10. Equipment according to a claim 2 to 9, characterised thereby that the holding devices (5) are fastened to an endless conveyor (29) which is driven to continuously circulate and which consists of a pair of conveyor belts (4) guided parallel to one another, wherein each time one of the two holding elements (6), which form the holding device (5), is arranged at a respective one the two conveyor belts (4) in such a manner that they stand opposite one another while leaving an intermediate space (7) therebetween, and that the processing means (11, 15, 22, 31) are arranged in the region of the periphery of a deflecting wheel (3) for the conveyor (2), wherein at least the punch device (22) and the tong-like gripper means (31) are arranged in their active setting to carry out an accompanying movement synchronised with the circulatory speed of the conveyor (2).

## Revendications

1. Procédé de traitement d'extrémités de volailles contenant des os, se composant d'éléments inférieurs (41) et supérieurs (42) d'ailes ou de pattes, qui sont reliés entre eux par une articulation médiane (46), à la formation de laquelle participent la tête intérieure d'articulation de l'élément inférieur (41) et la tête extérieure d'articulation de l'élément supérieur (42), **caractérisé par** les étapes de procédé suivantes :
   a) Découper la peau dans la zone de la tête extérieure (43) d'articulation de l'élément inférieur (41) par une découpe dans le sens radial, effectuée sensiblement au moins jusqu'à l'os,
   b) dégager le flancs dans la zone de l'articulation médiane (46),
   c) enlever l'articulation médiane (46), et
   d) déplacer les moignons d'os ainsi formés (47 à 48) en les écartant l'un de l'autre en retenant la partie charnue (49).

2. Appareil de mise en oeuvre du procédé selon la revendication 1, dans lequel est prévu au moins un dispositif (5), qui est mobile le long d'une voie de traitement, de maintien de la marchandise à traiter **caractérisé en ce que** sont disposés successivement le long de la voie de déplacement des dispositifs de maintien :
   - un appareil de découpe (11) destiné à séparer la peau recouvrant la zone de l'articulation médiane (46) par des découpes sensiblement transversales à la direction longitudinale des éléments inférieurs (41) et supérieurs (42) d'ailes ou de pattes,
   - un dispositif de racloir à taillant (15) pour racler les parties de chair et de peau reposant sur les flancs de l'articulation médiane (46),
   - un dispositif d'estampage (22) pour enlever l'articulation médiane (46), et

- des moyens de saisie (31) en forme de tenailles pour retirer les moignons d'os (47 et 48) hors des éléments charnus qui les entourent.

3. Appareil selon la revendication 2, **caractérisé en ce que** chaque dispositif de maintien (5) comporte deux éléments de maintien en saillie (6), espacés l'un de l'autre, qui sont pourvus chacun d'un orifice (8) en forme d'évidement ouvert destiné à maintenir la marchandise à traiter dans la zone des têtes d'articulations situées à l'extérieur (43 et 44), et en ce que le déplacement de chaque dispositif de maintien (5) s'effectue de manière transversale à une ligne de liaison virtuelle (9) reliant les orifices (8).

4. Appareil selon la revendication 2 ou 3, **caractérisé en ce que** un abaisseur actionnable (10) pour maintenir temporairement et orienter la marchandise à traiter est associé à chaque dispositif de maintien (5)

5. Appareil selon l'une des revendications 2 à 4, **caractérisé en ce que** le dispositif de découpe (11) est disposé de façon stationnaire et comprend une paire de lames de couteaux (12) pourvues de tranchants (14) orientés dans le sens opposé au mouvement des dispositifs de maintien (5), qui sont disposées de façon à pouvoir se déplacer à travers la marchandise à traiter, en opposition à une force élastique, dans un plan de tracé parallèle à la voie de déplacement des dispositifs de maintien (5) et sensiblement perpendiculaire à ces derniers et immédiatement près de la voie des flancs extérieurs de l'un des éléments de maintien (6).

6. Appareil selon l'une des revendications 2 à 5, **caractérisé en ce que** le dispositif de racloir à taillants (15) est disposé de façon stationnaire et contient une paire de couteaux en forme de coutres (16) qui peuvent être introduits, depuis le bas et le haut en direction de la marchandise à traiter, dans la zone de l'articulation médiane (46) et qui s'appuient de façon élastique sur cette dernière, qui présentent des arêtes de racloir (7) divergentes dans le plan sensiblement horizontal opposé à la direction de mouvement de la marchandise à traiter, et qui partent d'un taillant frontal (18) tourné vers l'avant.

7. Appareil selon l'une des revendications 2 à 6, **caractérisé en ce que** le dispositif d'estampage (22) comprend un poinçon creux (23) qui peut être introduit dans la voie de la marchandise à traiter et dont la section transversale est sensiblement adaptée au contour des têtes d'articulations qui participent à la formation de l'articulation médiane (46).

8. Appareil selon l'une des revendications 6 ou 7, **caractérisé en ce qu'**il est prévu des moyens (19) d'orientation de la marchandise à traiter dans la position souhaitée pour l'estampage de l'articulation médiane (46), ces moyens (19) comportant un poinçon de pression (20) ayant une surface frontale sensiblement en forme de cône creux, ce poinçon venant au contact d'au moins un flanc extérieur de l'articulation médiane (46).

9. Appareil selon l'une des revendications 2 à 8, **caractérisé en ce que** les moyens de saisie en forme de tenailles (31) sont respectivement disposés dans la zone immédiatement voisine des flancs extérieurs des éléments de maintien (6) et sont respectivement mobiles, dans des sens opposés, sensiblement en parallèle à l'axe longitudinal de la marchandise à traiter.

10. Appareil selon l'une des revendications 2 à 9, **caractérisé en ce que** les dispositifs de maintien (5) sont fixés à un transporteur sans fin entraîné (29) en circulation continue, composé d'une paire de bandes de transport (4) guidées en parallèle l'une à l'autre, chacun des deux éléments de maintien (6) constituant le dispositif de maintien (5) étant respectivement fixé à l'une des deux bandes transporteuses (4) d'une manière telle qu'ils sont disposés face à face lorsqu'ils quittent un espace intermédiaire (7) et en ce que les moyens de traitement (11, 15, 22, 31) sont disposés dans la zone de la périphérie d'une roue d'inversion de sens (3) du transporteur (2), au moins le dispositif d'estampage (22) et les moyens de saisie (31) étant montés de manière à exécuter dans leurs positions actives un mouvement d'accompagnement synchronisé avec la vitesse de circulation du transporteur (2).

Fig.1a    Fig.1b    Fig.1c    Fig.1d    Fig.1e

Fig.1f    Fig.1g    Fig.1h    Fig.1i    Fig.1k

EP 0 402 647 B1

Fig. 2